# DEMANDE DE BREVET EUROPEEN

(11) **EP 1 531 482 A2**
(43) Date de publication de la demande: **18.05.2005**
(21) Numéro de dépôt: 04103113.9
(22) Date de dépôt: 01.07.2004
(51) Int. Cl.: G21C 17/06

(54) **Dispositif et procédé de contrôle d'aspect extérieur de crayons de combustible pour réacteur nucléaire**

(30) Priorité: 04.07.2003 FR 0350294
(71) Demandeur: COMPAGNIE GENERALE DES MATIERES NUCLEAIRES, 78140 Velizy Villacoublay (FR)
(72) Inventeur: Fantini, Serge, 84100 Orange (FR); Legard, Patrick, 78800 Houilles (FR)
(74) Mandataire: Poulin, Gérard

(57) **Abrégé**

L'invention concerne un dispositif (1) de contrôle d'aspect extérieur de crayons de combustible (2) pour réacteur nucléaire, le dispositif comprenant des moyens optiques (40) disposant d'au moins une caméra (42,42') et reliés à un système d'acquisition et de traitement d'images (48) apte à détecter des défauts géométriques présents sur chaque crayon (2) à contrôler, et comportant en outre un rugosimètre (50) commandé de façon à mesurer la profondeur de chaque défaut géométrique détecté par le système d'acquisition et de traitement d'images (48).

D'autre part, l'invention se rapporte également à un procédé susceptible d'être mis en oeuvre à l'aide d'un tel dispositif (1).

## Description

### DOMAINE TECHNIQUE

La présente invention se rapporte de façon générale au domaine du contrôle d'aspect extérieur de crayons de combustible pour réacteur nucléaire, et plus spécifiquement au domaine des dispositifs et des procédés de contrôle d'aspect extérieur de crayons de combustible en fin de cycle de fabrication.

### ETAT DE LA TECHNIQUE ANTERIEURE

Typiquement, les crayons de combustible pour réacteur nucléaire sont des gaines en alliage de zirconium, dans lesquelles sont placées des matières fissiles. Ce type de gaines, disposant généralement d'une longueur comprise entre 3 et 5 m et d'un diamètre compris entre 8 et 15 mm, présente une première extrémité fermée ainsi qu'une seconde extrémité ouverte, cette seconde extrémité étant obturée à l'aide d'un bouchon soudé sur la gaine, après l'introduction des matières fissiles à l'intérieur de cette même gaine.

En fin de fabrication d'un crayon de combustible, il est habituellement requis que sa surface extérieure, globalement cylindrique et de section circulaire, dispose d'un état de surface satisfaisant, par exemple du type « poli-miroir ».

Ainsi, afin de contrôler l'aspect extérieur d'un crayon en sortie de fabrication, il est procédé à la détection de plusieurs types de défauts, et cela sur l'intégralité de la surface extérieure du crayon, comprenant notamment la surface extérieure du bouchon d'extrémité.

Parmi les défauts recherchés, il est tout d'abord mentionné les défauts géométriques, assimilables à des défauts en trois dimensions présents au niveau de la surface extérieure du crayon.

A titre d'exemples illustratifs, les défauts géométriques peuvent prendre la forme de rainures longitudinales ou circonférentielles sur la surface extérieure du crayon, ces rainures pouvant être considérées comme des défauts lorsqu'elles atteignent une profondeur supérieure à 25 µm. De plus, il peut également s'agir de chocs, de matages ou encore d'arrachements de matière, toujours au niveau de cette même surface extérieure du crayon.

Le contrôle d'aspect extérieur d'un crayon de combustible consiste en outre à détecter les défauts de propreté, ceux-ci se présentant habituellement sous la forme de traces d'huile ou de corps étrangers sur la surface extérieure, ou encore sous la forme de marques noires ou colorées de superficies supérieures à une valeur déterminée.

Enfin, une troisième catégorie de défauts à détecter concerne les défauts d'aspect de soudure du bouchon d'extrémité. Ce type de défauts, susceptible d'être présent sur le cordon de soudure de ce bouchon d'extrémité, peut se présenter sous la forme de piqûres, de soufflures, de craquelures, de débordements, de manques, d'écroulements, ou encore d'un défaut de coloration du cordon de soudure.

De l'art antérieur, on connaît une solution visant à contrôler l'aspect extérieur des crayons de combustible sortant de la fabrication, par l'intermédiaire d'un opérateur qualifié travaillant à l'oeil nu et sans aucun outil de mesure à sa disposition.

En effet, les crayons de combustible sortant de la fabrication sont typiquement disposés à l'horizontale sur un banc, en nappe de trente-deux éléments. Une fois installés, ils sont alors susceptibles d'être mis en rotation autour de leurs propres axes longitudinaux à l'aide d'un mécanisme d'entraînement par friction, afin que l'opérateur puisse contrôler la totalité de la surface extérieure de ces crayons. A ce titre, il est noté que des éclairages tangentiels, réglables en intensité, facilitent la détection des défauts à l'opérateur qualifié.

Cependant, lors des opérations de contrôle d'aspect extérieur, un écran de verre au plomb doit obligatoirement être prévu entre les crayons et l'opérateur, dans le but évident de protéger ce dernier contre l'irradiation émise par les crayons de combustible. De cette façon, un inconvénient majeur relatif à la présence de l'écran est que celui-ci dispose d'une épaisseur d'environ 100 mm, et qu'il n'est par conséquent pas parfaitement translucide. De plus, la croissance du nombre de rayures sur cet écran au cours du temps gène considérablement la vision de l'opérateur.

Dans ces conditions, l'appréciation de certains défauts tels que la superficie des tâches, la profondeur des rainures ou encore l'évaluation de la coloration des cordons de soudure, s'avère relativement difficile à réaliser. Ainsi, en cas de doute de la part de l'opérateur, le crayon concerné est mis de côté afin d'être recontrôlé par un autre opérateur, ce qui se traduit directement par une perte de temps significative, ainsi que par une augmentation non négligeable du coût de production des crayons.

Il est également indiqué que la mise en oeuvre de cette technique de contrôle d'aspect extérieur présente des inconvénients directement liés à la présence de l'opérateur non équipé de moyens de mesure.

Effectivement, pour les défauts dont la taille, la profondeur ou la coloration doit être appréciée, le verdict émis est largement sujet à l'expérience et à la fatigue de l'opérateur, la fatigue étant pourtant fortement accélérée par le port d'un tablier de protection de plomb et l'attention extrême et permanente que requiert un tel poste de contrôle. Ainsi, notamment lorsqu'un défaut géométrique a été détecté par l'opérateur mais que son appréciation de la profondeur est erronée, cet opérateur peut être conduit à effectuer des faux rejets, ou au contraire à ne pas considérer un défaut pourtant non acceptable.

Enfin, il est noté que généralement, les objectifs de production nécessitent un nombre important d'opérateurs qualifiés dans le domaine du contrôle d'aspect extérieur de crayons de combustible, ce qui engendre naturellement des coûts de production élevés.

### EXPOSÉ DE L'INVENTION

L'invention a donc pour but de proposer un dispositif et un procédé de contrôle d'aspect extérieur de crayons de combustible pour réacteur nucléaire, remédiant au moins partiellement aux inconvénients mentionnés ci-dessus relatifs à la réalisation de l'art antérieur.

Plus spécifiquement, le but de l'invention est de présenter un dispositif et un procédé de contrôle d'aspect extérieur de crayons de combustible utilisant un outillage approprié permettant d'émettre un verdict fiable, juste et répétitif dans le temps pour au moins une partie des défauts mentionnés ci-dessus, contrairement à la solution proposée antérieurement dans laquelle le verdict humain est sujet à interprétation et risque d'entraîner des faux rejets et/ou des absences de détection de défauts dégradant réellement l'aspect extérieur du crayon.

Pour ce faire, l'invention a tout d'abord pour objet un dispositif de contrôle d'aspect extérieur de crayons de combustible pour réacteur nucléaire, comprenant des moyens optiques disposant d'au moins une caméra et reliés à un système d'acquisition et de traitement d'images apte à détecter des défauts géométriques présents sur chaque crayon à contrôler, et comportant en outre un rugosimètre commandé de façon à mesurer la profondeur de chaque défaut géométrique détecté par le système d'acquisition et de traitement d'images.

Avantageusement, avec le dispositif de contrôle selon l'invention, la détection des défauts géométriques tels que ceux décrits précédemment n'est plus effectuée à l'aide de l'oeil humain, mais automatiquement par l'intermédiaire de moyens optiques tels que des caméras, couplés à un système d'acquisition et de traitement d'images susceptible de détecter ce type de défauts. Lorsqu'un défaut géométrique a été détecté par le système d'acquisition et de traitement d'images, le rugosimètre est alors commandé de façon à ce qu'il puisse mesurer la profondeur de ce défaut, par exemple dans le but de la comparer à une valeur préétablie afin de déterminer si le défaut concerné est acceptable ou non.

Ainsi, les problèmes rencontrés antérieurement liés à la fatigue et à l'appréciation de l'opérateur sont totalement écartés, aussi bien dans le travail de détection des défauts géométriques présents sur les crayons, que dans l'opération d'appréciation de la profondeur de ces défauts. Par conséquent, les risques de faux rejets de crayons de combustible sont quasiment réduits à néant, ce qui se traduit directement par des gains en termes de coûts de production et de temps de contrôle.

De façon avantageuse, il est indiqué que les moyens optiques sont en mesure de balayer la surface extérieure d'un crayon sans qu'il n'y ait d'écran de verre au plomb de protection situé entre les deux entités. De cette manière, le dispositif selon l'invention est capable de détecter des défauts géométriques de toutes petites tailles, même ceux étant difficilement visibles à l'oeil nu.

En outre, l'électronique de traitement classique nécessaire au bon fonctionnement du dispositif peut aisément être déporté de la zone sensible, de sorte qu'il n'est par conséquent pas soumis aux irradiations émises par les crayons de combustible.

Par ailleurs, le dispositif de contrôle selon l'invention, préférentiellement destiné à contrôler l'aspect extérieur des crayons en sortie du cycle de fabrication, est capable de fonctionner en continu, sans nécessiter d'opérateurs qualifiés.

Toujours de manière avantageuse, la présence des moyens optiques et du rugosimètre à proximité des crayons de combustible n'engendre qu'un encombrement très faible.

A ce titre, il est indiqué que la précision de mesure susceptible d'être procurée par un rugosimètre classique, par exemple du type rugosimètre optique, est tout à fait adaptée à celle nécessaire aux besoins rencontrés. De plus, ces appareils de mesure ne requièrent avantageusement pas de contact avec le crayon pour effectuer les mesures de profondeur des défauts géométriques, ni même la présence de matière hydrogénée entre cet appareil de mesure et le crayon, cette configuration étant de toute façon totalement écartée pour des raisons évidentes de sûreté/criticité.

D'autre part, il est noté que le dispositif selon l'invention peut avantageusement employer les moyens optiques ainsi que le système d'acquisition et de traitement d'images afin de détecter d'autres types de défauts que les défauts géométriques. En effet, le système d'acquisition et de traitement d'images est du type logiciel de traitement deux dimensions, et est donc parfaitement capable de détecter l'ensemble des défauts de propreté comme la présence de traces d'huile et de corps étrangers sur la surface extérieure d'un crayon, ou encore la présence sur cette même surface de marques noires ou colorées de superficies supérieures à une valeur déterminée.

De la même façon, le système est également capable de détecter l'ensemble des défauts d'aspect de soudure du bouchon d'extrémité, tels que les piqûres, les soufflures, les craquelures, les débordements, les manques, les écroulements, ou encore les défauts de coloration du cordon de soudure.

Préférentiellement, le dispositif de contrôle comprend :
- un banc de déplacement sur lequel peut être amené un plateau muni d'une pluralité de crayons de combustible agencés sensiblement parallèlement les uns à côté des autres, le plateau étant disposé sur le banc de sorte que les crayons soient agencés parallèlement à une direction longitudinale du banc,
- un chariot apte à être déplacé parallèlement à la direction longitudinale du banc de déplacement,
- un support de tête d'inspection et de mesure monté sur le chariot et apte à être déplacé par rapport à ce dernier parallèlement à une direction transversale du banc de déplacement,
- une tête d'inspection et de mesure comprenant au moins les moyens optiques et le rugosimètre,
- des moyens de mise en rotation des crayons de combustible, susceptibles de mettre en rotation chacun des crayons selon leur propre axe longitudinal,
- un ensemble électronique et informatique comportant notamment le système d'acquisition et de traitement d'images, et
- une règle codeuse prévue sur le banc de déplacement et apte à délivrer, à l'ensemble électronique et informatique, la position du chariot par rapport au banc.

De façon avantageuse, cet agencement spécifique permet de contrôler une pluralité de crayons placés par exemple en nappe et horizontalement, et cela automatiquement par l'intermédiaire de l'ensemble électronique et informatique qui est préférentiellement prévu de manière à pouvoir commander la totalité des déplacements et des actions des divers éléments constitutifs du dispositif. A cet égard, il est notamment précisé que la présence de la règle codeuse sur le banc de déplacement permet de localiser parfaitement les défauts détectés, cela autorisant par la suite des déplacements et des positionnements précis du rugosimètre, afin que ce dernier puisse mesurer les profondeurs des différents défauts géométriques détectés.

De préférence, pour chaque crayon, les moyens optiques sont aptes à réaliser un balayage de la surface extérieure du crayon par une pluralité de déplacements du chariot tout le long du crayon concerné, chaque déplacement étant effectué pour une position angulaire donnée du crayon. Par conséquent, en réglant judicieusement les diverses positions angulaires du crayon concerné, il est facilement possible de balayer l'intégralité de la surface extérieure de ce même crayon en réalisant plusieurs allers-retours avec le chariot, chaque aller et chaque retour étant alors destinés à l'inspection d'un secteur angulaire particulier de cette surface extérieure.

De plus, on peut prévoir que lors d'un balayage de la surface extérieure d'un crayon, les moyens optiques sont aptes à délivrer une pluralité d'images au système d'acquisition et de traitement d'images, chaque image délivrée du crayon étant associée à une adresse indiquant la position angulaire de ce crayon, ainsi que la position du chariot par rapport au banc de déplacement.

De préférence, comme mentionné précédemment, lorsqu'au moins un défaut géométrique a été détecté sur un crayon par le système d'acquisition et de traitement d'images, l'ensemble électronique et informatique est apte à provoquer, grâce aux adresses associées aux images délivrées par les moyens optiques, le déplacement du rugosimètre de manière à ce qu'il puisse mesurer la profondeur de chaque défaut géométrique détecté.

Les moyens optiques sont préférentiellement constitués d'une pluralité de caméras primaires ainsi que d'une pluralité de caméras secondaires, les caméras primaires et secondaires étant des caméras à dispositif à transfert de charge (de l'anglais « CCD camera »), et étant chacune apte à balayer simultanément au moins deux crayons de combustible adjacents.

Toujours de manière préférée, les caméras primaires ainsi que les caméras secondaires sont montées sur une plaque assemblée sur le support de tête d'inspection et de mesure, et les caméras secondaires sont agencées de manière à pouvoir balayer une surface tronconique d'un bouchon d'extrémité de chacun des crayons de combustible à contrôler, lorsque ceux-ci sont mis en rotation.

En outre, le rugosimètre est préférentiellement monté sur une plaque élévatrice assemblée sur le support de tête d'inspection et de mesure, de manière à ce que le rugosimètre puisse être rapproché de chaque crayon pour effectuer la mesure de la profondeur de chaque défaut géométrique détecté.

Dans un mode de réalisation préféré de la présente invention, la tête de mesure et d'inspection comprend en outre des détecteurs à diodes et des rampes d'éclairage permettant de détecter des défauts de propreté, tels que des traces d'huile, présents sur chaque crayon de combustible à contrôler. Par conséquent, ces détecteurs à diodes peuvent éventuellement être utilisés pour déceler des traces d'huile difficilement détectables à l'aide des moyens optiques décrits précédemment et couplés au système d'acquisition et de traitement d'images.

Naturellement, l'association entre les détecteurs à diodes et les rampes d'éclairage pourrait également être employée pour assurer la détection de tout autre élément susceptible de modifier substantiellement la réflexion lumineuse produite par les crayons concernés.

Enfin, on peut prévoir que l'ensemble électronique et informatique comporte des moyens d'informations aptes à délivrer et/ou à conserver en mémoire, pour chaque crayon contrôlé, une fiche de résultat du contrôle effectué. A titre d'exemples indicatifs, cette fiche de résultat peut par exemple indiquer la mention « bon », « mauvais » ou « à recontrôler », ainsi que l'adresse et/ou l'image du/des défaut(s) détecté(s) dans les deux derniers cas.

L'invention a en outre pour objet un procédé de contrôle d'aspect extérieur de crayons de combustible pour réacteur nucléaire, comprenant les étapes suivantes :
- détection de défauts géométriques présents sur chaque crayon à contrôler, à l'aide de moyens optiques disposant d'au moins une caméra et reliés à un système d'acquisition et de traitement d'images, et
- mesure de la profondeur de chaque défaut géométrique détecté lors de l'étape de détection de défauts géométriques, à l'aide d'un rugosimètre.

Préférentiellement, pour chaque crayon, l'étape de détection de défauts géométriques comprend une opération de balayage de la surface extérieure du crayon à l'aide des moyens optiques, l'opération de balayage étant réalisée en effectuant une pluralité de déplacements des moyens optiques tout le long du crayon concerné, chaque déplacement étant réalisé pour une position angulaire donnée du crayon.

Lors de l'opération de balayage de la surface extérieure d'un crayon, les moyens optiques délivrent de préférence une pluralité d'images au système d'acquisition et de traitement d'images, chaque image délivrée du crayon étant associée à une adresse indiquant la position angulaire de ce crayon ainsi que la position d'un chariot sur lequel sont montés les moyens optiques, par rapport à un banc de déplacement.

De manière préférée, lorsqu'au moins un défaut géométrique a été détecté sur un crayon par le système d'acquisition et de traitement d'images, il est procédé, grâce aux adresses associées aux images délivrées par les moyens optiques, à un déplacement du rugosimètre de manière à ce qu'il puisse mesurer la profondeur de chaque défaut géométrique détecté.

De manière préférée, la mesure de la profondeur de chaque défaut géométrique détecté s'effectue en rapprochant le rugosimètre du crayon concerné.

Par ailleurs, on peut prévoir que l'opération de balayage de la surface extérieure des crayons s'effectue à l'aide d'une pluralité de caméras primaires ainsi que d'une pluralité de caméras secondaires, les caméras primaires et secondaires étant des caméras à dispositif à transfert de charge, et balayant chacune simultanément au moins deux crayons de combustible adjacents.

Dans un mode de réalisation préféré de la présente invention, le procédé de contrôle comprend en outre une opération de détection de défauts de propreté présents sur chaque crayon de combustible à contrôler, tels que des traces d'huile, l'opération étant réalisée à l'aide de détecteurs à diodes et de rampes d'éclairage.

Enfin, le procédé comprend de préférence une étape de délivrance, pour chaque crayon contrôlé, d'une fiche de résultat du contrôle effectué.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de dessus d'un dispositif de contrôle d'aspect extérieur de crayons de combustible, selon un mode de réalisation préféré de la présente invention,
- la figure 2 représente une vue de face du dispositif de contrôle représenté sur la figure 1,
- les figures 3a à 3c représentent chacune une vue de côté, à plus grande échelle, d'une partie du dispositif de contrôle représenté sur les figures 1 et 2, schématisant divers opérations effectuées lors d'un contrôle d'aspect extérieur des crayons de combustible, et
- la figure 4 représente une vue de côté, à plus grande échelle, d'une partie du dispositif de contrôle représenté sur les figures 1 et 2, schématisant une opération de détection de traces d'huile sur les crayons de combustible.

### EXPOSÉ DÉTAILLÉ DE MODES DE RÉALISATION PRÉFÉRÉS

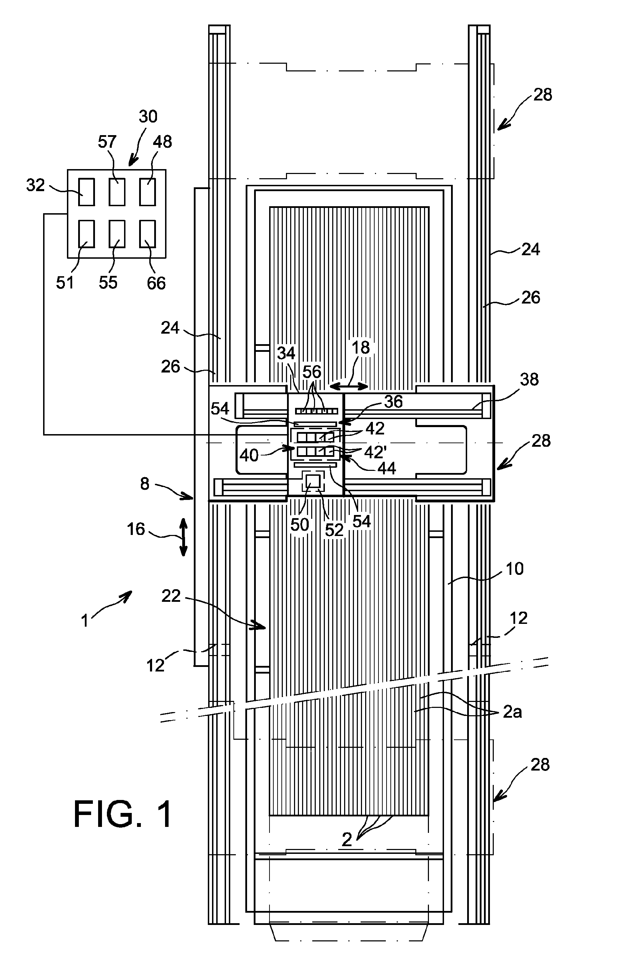

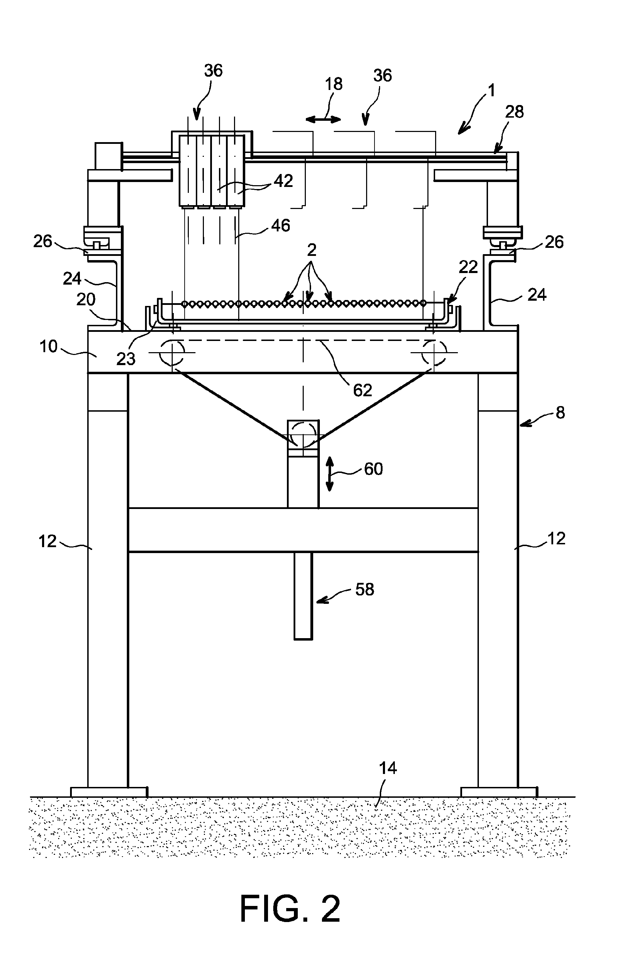

En référence conjointement aux figures 1 et 2, il est représenté un dispositif 1 de contrôle d'aspect extérieur de crayons de combustible 2 pour réacteur nucléaire (non représenté), selon un mode de réalisation préféré de la présente invention.

Il est noté que ce dispositif 1 est destiné à permettre la réalisation d'un contrôle d'aspect de la surface extérieure 2a des crayons 2, en sortie du cycle de fabrication de ces derniers. Ainsi, le dispositif 1 est conçu de manière à vérifier l'état de surface de la surface extérieure 2a des crayons 2, et est donc capable de déceler la présence d'éventuels défauts inacceptables au regard des exigences de qualité requises, les défauts recherchés étant de mêmes types que ceux énumérés ci-dessus dans la partie état de la technique antérieure.

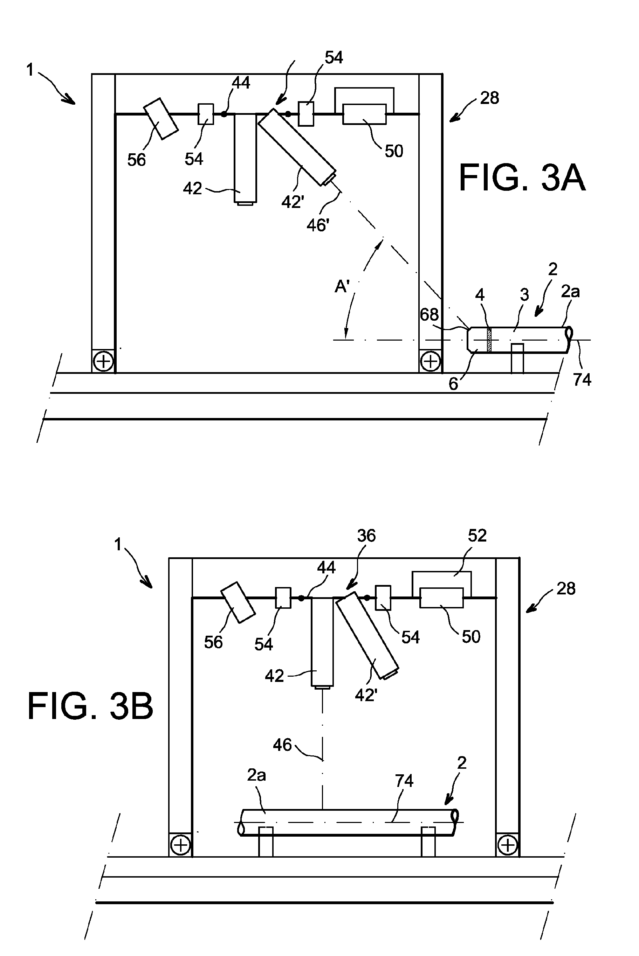

A cet égard, il est noté que l'expression « surface extérieure 2a » d'un crayon 2 est à entendre comme comprenant la surface extérieure d'une gaine principale 3 du crayon 2, un cordon de soudure 4 reliant la gaine principale 3 à un bouchon d'extrémité 6, ainsi que la surface extérieure de ce même bouchon d'extrémité 6, comme cela est notamment représenté sur la figure 3a. Il est indiqué qu'une surface tronconique 68 du bouchon d'extrémité 6, habituellement appelée surface d'extrémité du bouchon 6, fait partie intégrante de la surface extérieure 2a d'un crayon 2.

Sur les figures 1 et 2, on peut apercevoir que le dispositif 1 comprend un banc de déplacement 8, ce banc 8 étant essentiellement constitué d'un châssis 10 monté sur des pieds 12 fixés au sol 14. Le châssis 10 de forme sensiblement rectangulaire repose préférentiellement parallèlement au sol 14, et s'étend longitudinalement selon une direction longitudinale du banc 8 représentée par la double-flèche 16 sur la figure 1, et transversalement selon une direction transversale du banc 8 représentée par la double-flèche 18 sur cette même figure.

Ainsi, le châssis 10 du banc de déplacement 8 définit une surface plane 20, sensiblement horizontale et parallèle au sol 14, sur laquelle peut être placé un plateau 22 muni d'une pluralité de crayons 2, ces derniers étant agencés sensiblement parallèlement les uns à côté des autres. De plus, le plateau 22 sur lequel reposent les crayons de combustible 2 sortant de leur cycle de fabrication, par exemple de façon à former une nappe de trente-deux éléments, est amené sur le banc 8 de sorte que ces mêmes crayons 2 soient agencés parallèlement à la direction longitudinale 16 du banc 8, et donc sensiblement parallèlement à la surface plane 20 du châssis 10. Il est également précisé qu'un emplacement rectangulaire 23, spécialement délimité pour recevoir le plateau 22, est prévu au niveau de la surface plane 20 du châssis 10. De cette manière, le plateau 22 est en mesure d'occuper une position précise par rapport au banc 8, cette position précise étant primordiale pour le bon déroulement des opérations de contrôle d'aspect extérieur des crayons 2.

D'autre part, le banc de déplacement 8 du dispositif 1 comprend deux poutres 24 s'étendant sensiblement parallèlement à la direction longitudinale 16 du banc 8, et étant situées de part et d'autre de l'emplacement rectangulaire 23. Sur chacune de ces poutres 24, se trouve un rail de roulement 26 autorisant le déplacement d'un chariot 28 parallèlement à la direction longitudinale 16 du banc 8.

Comme on peut le voir sur la figure 1, les rails de roulement 26 disposent d'une longueur plus importante que celle du plateau 22, afin de permettre le dégagement du chariot 28, et de ce fait d'assurer un bon contrôle de la surface tronconique 68 des bouchons d'extrémité 6 des crayons de combustible 2, comme cela va être exposé ci-après.

Le chariot 28 du dispositif de contrôle 1 est donc en mesure d'être déplacé le long des rails de roulement 26 du banc 8, préférentiellement à l'aide d'un moteur pas à pas et d'une courroie crantée (non représentés), le moteur étant piloté par des moyens de commande 32 faisant partie intégrante d'un ensemble électronique et informatique 30, dont la fonction principale réside dans l'automatisation totale du dispositif de contrôle 1. Bien entendu, l'ensemble 30 peut comporter des éléments classiques tels que des ordinateurs, des multiplexeurs ou encore des modules d'alimentation, qui ne seront par conséquent pas davantage décrits en raison de leur caractère banal pour un homme du métier. En revanche, les éléments de l'ensemble 30 spécifiques à la présente invention seront naturellement exposés ci-après.

Le banc de déplacement 8 est équipé d'une règle codeuse (non représentée) permettant de délivrer à l'ensemble électronique et informatique 30, de préférence en continu, la position du chariot 28 par rapport à ce banc de déplacement 8.

Un support 34 d'une tête d'inspection et de mesure 36 est monté sur le chariot 28 du dispositif 1, comme l'illustrent clairement les figures 1 et 2. Sur ces figures, on peut en effet voir que le support 34 repose sur des rails de roulement 38 s'étendant sensiblement parallèlement à la direction transversale 18 du banc 8, de sorte que ce support 34 est alors en mesure d'être déplacé parallèlement à cette même direction, par rapport au chariot 28.

Avec cet agencement spécifique et en effectuant des déplacements judicieux du support 34 par rapport au chariot 28 et de ce même chariot 28 par rapport au banc de déplacement 8, il est donc évident que la tête d'inspection et de mesure 36 est capable de couvrir la totalité de la surface supérieure formée par les crayons 2 reposant en nappe de trente-deux éléments sur le plateau 22.

Ici encore, il est indiqué que le déplacement du support 34 sur le chariot 28 est préférentiellement réalisé à l'aide d'un moteur pas à pas et d'une courroie crantée (non représentés), le moteur étant de préférence piloté par les moyens de commande 32 de l'ensemble électronique et informatique 30.

La tête d'inspection et de mesure 36, solidaire du support 34, comporte des moyens optiques 40 prenant préférentiellement la forme d'une pluralité de caméras 42,42' à dispositif à transfert de charge. Dans le mode de réalisation préféré décrit et représenté sur les figures 1 et 2, les moyens optiques 40 comprennent quatre caméras primaires 42 ainsi que quatre caméras secondaires 42'. Par ailleurs, il est indiqué que les caméras secondaires 42' sont destinées à balayer la surface tronconique 68 des bouchons d'extrémité 6 des crayons 2, tandis que les caméras primaires 42 sont destinées à balayer l'ensemble de la surface extérieure 2a de ces mêmes crayons 2, autre que cette surface tronconique 68 des bouchons d'extrémité 6. A cet égard, il est à noter que la surface inspectée par les caméras primaires 42 est sensiblement cylindrique de section circulaire.

De préférence, le groupe de caméras primaires 42 ainsi que le groupe de caméras secondaires 42' se présentent chacun sous la forme d'une rangée de caméras parallèle à la direction transversale 18, et sont chacun destinés à balayer huit crayons 2 adjacents en même temps. De plus, chacune de ces caméras 42,42' est effectivement réglée pour avoir deux crayons 2 adjacents dans son champ de vision. Bien entendu, le nombre de caméras 42,42' et le nombre de crayons 2 qu'elles sont capables de balayer dans un même temps peuvent être adaptés en fonction des besoins rencontrés, sans sortir du cadre de l'invention.

Les quatre caméras primaires 42, du type à balayage progressif (de l'anglais « progressive scan »), sont de préférence montées sur une plaque 44 assemblée sur le support 34, de manière à ce que chaque axe optique 46 d'une caméra 42 se situe sensiblement perpendiculairement aux deux crayons 2 qu'elle a dans son champ de vision, et sensiblement perpendiculairement à la surface plane 20 du châssis 10, comme le montre clairement la figure 2.

Par ailleurs, les quatre caméras secondaires 42' sont de préférence également montées sur cette même plaque 44, mais de façon à être en mesure de visualiser correctement la surface tronconique 68 des bouchons d'extrémité 6. Ainsi, comme cela est clairement montré sur la figure 3a, les caméras primaires 42 sont montées sensiblement verticalement, tandis que les caméras secondaires 42' sont montées de façon inclinée.

Les caméras 42,42' sont susceptibles de délivrer des images des crayons 2 à un système d'acquisition et de traitement d'images 48 auquel elles sont reliées, le système 48 du type logiciel de traitement deux dimensions faisant partie intégrante de l'ensemble électronique et informatique 30.

Par conséquent, le système 48 est apte à détecter des défauts présents sur les crayons de combustible 2, tels que des défauts géométriques similaires à ceux indiqués ci-dessus dans la partie état de la technique antérieure, à partir des images délivrées par les caméras 42,42' et suite à un traitement classique de ces dernières. Naturellement, le système d'acquisition et de traitement d'images 48 est également apte à détecter des défauts de propreté comme la présence de trace d'huile et de corps étrangers sur la surface extérieure 2a d'un crayon 2, ou encore la présence sur cette même surface 2a de marques noires ou colorées de superficies supérieures à une valeur déterminée.

De plus, le système 48 est également capable de détecter l'ensemble des défauts d'aspect de soudure du bouchon d'extrémité 6, tels que les piqûres, les soufflures, les craquelures, les débordements, les manques, les écroulements, ou encore les défauts de coloration du cordon de soudure 4.

La tête d'inspection et de mesure 36 comporte également un rugosimètre 50, monté sur une plaque élévatrice 52 assemblée sur le support 34, de manière à ce que ce rugosimètre 50 se situe sensiblement au niveau du support 34 lorsque la plaque élévatrice 52 occupe une position escamotée, et de façon à ce que ce rugosimètre 50 se situe à proximité des crayons 2 lorsque la plaque 52 se trouve dans une position saillante. Notons que cette dernière position est celle adoptée pour effectuer une mesure de la profondeur d'un défaut géométrique détecté par le système 48, et que cette même position saillante est obtenue par un déplacement vers le sol 14 de la plaque élévatrice 52, dans une direction sensiblement perpendiculaire à la surface plane 20 du châssis 10.

A cet égard, les déplacements de la plaque élévatrice 52 sont préférentiellement assurés par les moyens de commande 32 de l'ensemble 30.

Typiquement, le rugosimètre 50 assurant la mesure de profondeur des défauts géométriques détectés est un capteur rugosimètre optique du type PERTHOMETER (marque déposée) ou CONFOCAL (marque déposée), dont l'étendue de la mesure est de plus ou moins 300 µm.

De plus, il est noté que les données récoltées par le rugosimètre 50 sont transmises à des moyens d'acquisition et de traitement 51 faisant partie intégrante de l'ensemble 30, ces moyens 51 étant alors aptes à traiter les données reçues afin de déterminer la profondeur des défauts détectés, puis à transférer les mesures de profondeur à une mémoire centrale 55 de cet ensemble 30.

Plus spécifiquement en référence à la figure 1, la tête 36 comprend des rampes d'éclairage 54, assurant de préférence un éclairage continu et stable. A titre d'exemple illustratif, deux rampes 54 peuvent être placées parallèlement à la direction transversale 18 du banc 8, respectivement de part et d'autre des moyens optiques 40.

Outre la faculté qu'offrent les rampes 54 aux caméras 42,42' de prendre des images de bonne qualité, ces rampes 54 peuvent également être placées en association avec des détecteurs à diode 56, solidaires du support 34. Cette association autorise la détection de défauts de propreté présents sur la surface extérieure 2a des crayons 2, tels que des traces d'huile, comme cela sera décrit plus en détail ci-dessous. Ainsi, ces détecteurs à diodes 56 peuvent éventuellement être utilisés pour déceler des traces d'huile difficilement détectables à l'aide des moyens optiques 40 décrits ci-dessus et couplés au système d'acquisition et de traitement d'images 48.

De préférence, chaque détecteur à diode 56, agencé de façon à pouvoir se situer au droit d'un crayon de combustible 2 sur le support 34, est muni d'une lentille focalisant son champ de mesure sur le crayon 2 concerné, et est apte à recevoir la lumière émise par les rampes d'éclairage 54 et réfléchie sur la surface extérieure 2a de ce même crayon 2. De plus, les détecteurs 56 sont reliés à un module de gestion 57 faisant partie intégrante de l'ensemble 30, et permettant notamment de faire l'acquisition des résultats « TOUT » ou « RIEN » délivrés par les détecteurs 56.

A titre d'exemple indicatif, dans le mode de réalisation préféré de la présente invention, les détecteurs 56 sont placés les uns à côté des autres de manière à former une rangée s'étendant sensiblement parallèlement aux rampes d'éclairage 54, et donc sensiblement parallèlement à la direction transversale du banc 8.

Plus spécifiquement en référence à la figure 2, on voit que le dispositif de contrôle 1 comporte en outre des moyens de mise en rotation 58 des crayons 2, ces moyens 58 étant de préférence assemblés sur les pieds 12 du dispositif 1.

Les moyens 58 sont verticalement télescopiques, à savoir qu'ils peuvent être déplacés par rapport au banc 8 selon une direction verticale représentée par la double-flèche 60 sur la figure 2, cette direction verticale étant donc perpendiculaire à la surface plane 20 du châssis 10. De cette manière, en actionnant un moteur pas à pas (non représenté), piloté préférentiellement par les moyens de commande 32, il est possible d'établir ou de rompre le contact entre des courroies d'entraînement 62 des moyens 58, et des moyens (non représentés) situés eux-mêmes en contact permanent avec la partie inférieure de la surface extérieure 2a des crayons 2. Il est noté que sur la figure 2, une seule courroie d'entraînement 62 est visible, en raison du fait que le plan spécifique de cette figure 2 implique que les autres courroies sont masquées par celle représentée. Cependant, les courroies d'entraînement 62, de préférence identiques, sont espacées les unes des autres selon la direction longitudinale 16, par exemple tous les 400 mm environ.

D'autre part, les courroies d'entraînement 62 sont aptes à être mises en mouvement à l'aide d'un moteur pas à pas (non représenté), toujours préférentiellement piloté par les moyens de commande 32, afin que la partie supérieure de ces courroies 62 puisse être déplacée dans une direction sensiblement parallèle à la direction transversale 18 du banc 8.

A ce titre, il est précisé que de façon connue de l'homme du métier mais non représentée, les crayons 2 peuvent être déplacées par les moyens 58 de manière à ce qu'ils reposent sur des paliers sur lesquels sont intégrés des galets, ces derniers étant susceptibles d'être entraînés par les courroies d'entraînement 62. De plus, le plateau 22 est ajouré afin de pouvoir être traversé par ces courroies d'entraînement 62, et donc d'autoriser le contact entre celles-ci et les galets supportant les crayons 2.

Ainsi, lorsque les courroies d'entraînement 62 sont effectivement mises en mouvement et qu'elles sont en contact avec les galets supportant les crayons 2, elles provoquent alors la rotation de l'ensemble de ces derniers, selon leurs propres axes longitudinaux.

De cette façon, il est possible de contrôler la totalité de la surface extérieure 2a de chaque crayon 2 à l'aide de la tête d'inspection et de mesure 36, en réalisant une pluralité d'allers-retours avec le chariot 28, chaque aller et chaque retour du chariot 28 étant effectué tout le long des crayons 2 à contrôler, pour une position angulaire donnée de ces derniers.

Il est noté que lors de la délivrance d'une image par les moyens optiques 40 au système d'acquisition et de traitement d'images 48, l'ensemble électronique et informatique 30 est apte à associer à cette image une adresse indiquant la position angulaire du crayon 2 concerné, ainsi que la position du chariot 28 par rapport au banc de déplacement 8, cette position étant délivrée par la règle codeuse comme mentionné précédemment. De plus, les images traitées par le système 48, pour lesquelles un ou plusieurs défauts ont été détectés, sont aptes à être transférées dans la mémoire centrale 55 de l'ensemble 30, en étant associées à leurs adresses respectives dont le contenu est mentionné ci-dessus.

Enfin, l'ensemble 30 du dispositif 1 comprend des moyens d'informations 66 aptes à délivrer et/ou à conserver en mémoire, pour chaque crayon 2 contrôlé, une fiche de résultat du contrôle effectué. Comme cela sera mieux explicité ci-dessous, cette fiche de résultat peut indiquer la mention « bon », « mauvais » ou « à recontrôler », ainsi que l'adresse et/ou l'image du/des défaut(s) détecté(s) dans les deux derniers cas.

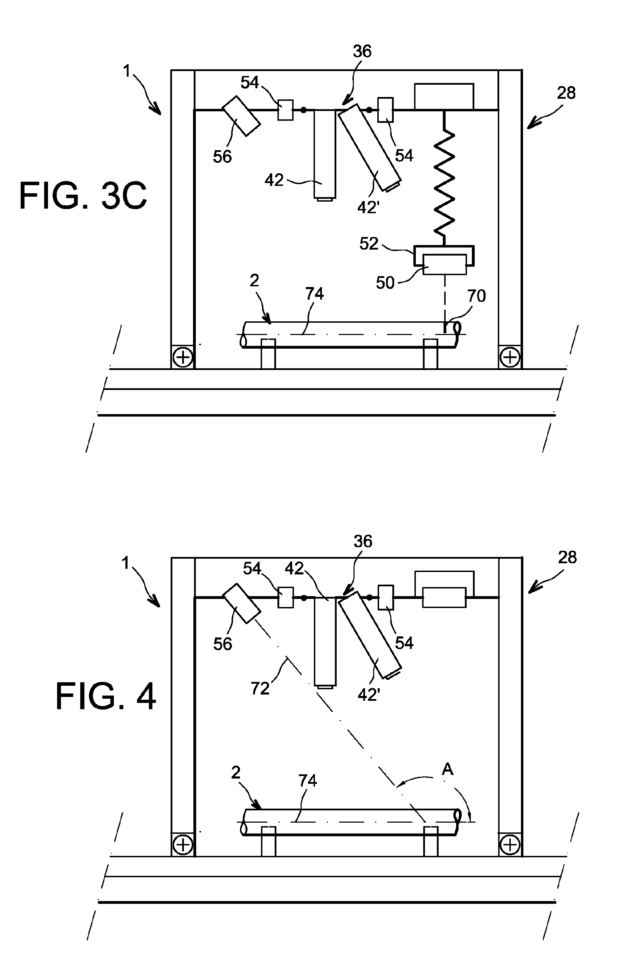

Le dispositif 1 de contrôle d'aspect extérieur qui vient d'être exposé est apte à fonctionner de la manière préférée décrite ci-dessous, faisant particulièrement référence aux figures 3a à 3c et à la figure 4.

Dans un premier temps, en référence aux figures 3a à 3c, il va être présenté le fonctionnement du dispositif 1, lors des opérations de contrôle d'aspect extérieur visant à détecter des défauts géométriques, tels que des défauts pouvant prendre la forme de rainures longitudinales ou circonférentielles sur la surface extérieure 2a des crayons 2, ces rainures pouvant être considérées comme des défauts lorsqu'elles atteignent une profondeur supérieure à 25 µm. De plus, il peut également s'agir de chocs, de matages ou encore d'arrachements de matière, toujours au niveau de cette même surface extérieure 2a des crayons 2.

Un plateau 22 de trente-deux crayons 2 est tout d'abord transporté en direction du banc de déplacement 8, par exemple de façon automatique, afin d'être amené à l'emplacement rectangulaire 23 prévu à cet effet sur le châssis 10.

De façon connue, les moyens de mise en rotation 58 sont ensuite actionnés par les moyens de commande 32, afin de dégager les crayons 2 de leur position d'arrivée, de sorte qu'ils reposent ensuite sur leurs galets associés.

A cet instant, le chariot 28 occupe une position de départ dans laquelle il est en butée contre le banc 8, et situé totalement au-delà des crayons 2 dans la direction longitudinale 16, comme cela est représenté en pointillés sur la figure 1. De plus, le support 34 de la tête d'inspection et de mesure 36 est positionné sur le chariot 28 de sorte que cette même tête 36 puisse inspecter les huit premiers crayons 2, situés à l'extrémité de la nappe des trente-deux éléments.

Comme le montre la figure 3a, lorsque le chariot 28 occupe sa position de départ, les axes optiques 46' des caméras secondaires inclinées 42' sont sensiblement perpendiculaires à la surface tronconique 68 du bouchon d'extrémité 6, cette surface tronconique 68 étant habituellement appelée surface d'extrémité du bouchon 6 et faisant partie intégrante de la surface extérieure de ce dernier. De plus, la surface tronconique 68 est d'axe principal identique à un axe longitudinal 74 du crayon 2. A titre d'exemple illustratif, les axes optiques 46' des caméras secondaires 42' peuvent être inclinés de 45° par rapport à un plan horizontal parallèle à la surface plane 20 du châssis 10. En d'autres termes, les axes optiques 46' forment un angle A' d'environ 45° avec l'axe longitudinal 74 des crayons 2, dans un plan perpendiculaire au sol 14.

Une image est alors prise par chacune des quatre caméras secondaires 42', puis transmise au système d'acquisition et de traitement d'images 48, qui dès la réception des images, commence à effectuer le traitement. Notons que dans le mode de réalisation préféré décrit, chaque image prise par une caméra secondaire 42' contient la représentation d'une partie de deux surfaces d'extrémité tronconiques 68 appartenant respectivement à deux crayons 2 adjacents.

Parallèlement, les moyens de commande 32 déplacent le chariot 28 en regard du bouchon d'extrémité 6, afin de commencer le balayage du reste de la surface extérieure de ce dernier, ainsi que celle de la gaine 3 et du cordon de soudure 4 des crayons 2. A ce titre, il est précisé que la partie restant à inspecter de la surface extérieure du bouchon d'extrémité 6 est sensiblement cylindrique de section circulaire, et constitue un prolongement de la surface extérieure de la gaine 3.

Pour ce faire, le chariot 28 est déplacé sur les rails de roulement 26, tout le long des crayons 2, comme le schématise la figure 3b. Des images sont alors prises régulièrement par les caméras primaires 42, pour des positions précises du chariot 28 par rapport au banc 8, afin que la partie supérieure des surfaces extérieures 2a des crayons 2, visible par ces mêmes caméras primaires 42, soit entièrement balayée. A cet égard, il est indiqué que la précision des positions du chariot 28 est facilement assurée par la règle codeuse équipant le banc de déplacement 8.

Après chaque prise de vue, les images sont directement délivrées au système 48, puis analysées par ce dernier pendant que le chariot 28 se déplace afin de rejoindre la position dans laquelle les caméras primaires 42 doivent réaliser les prises de vue suivantes.

Dans le cas où un ou plusieurs défauts géométriques sont détectés par le système 48, les images correspondantes sont transférées dans la mémoire centrale 55, en étant associées à leurs adresses respectives indiquant la position angulaire du crayon 2 concerné, ainsi que la position du chariot 28 par rapport au banc de déplacement 8. En revanche, les images n'ayant fait l'objet d'aucune détection de défaut géométrique ne sont de préférence pas conservées en mémoire. Néanmoins, il pourrait être prévu de les conserver pendant une durée déterminée, par exemple de l'ordre de quelques jours, en les stockant de façon compressée sur un support d'enregistrement tel qu'un CD-ROM.

Ainsi, le chariot 28 est déplacé à vitesse constante par les moyens de commande 32 jusqu'à sa position finale dans laquelle il est en butée contre le banc 8, et situé en regard des extrémités des crayons 2 opposées aux bouchons 6, comme cela est également représenté en pointillés sur la figure 1.

Une fois cette position finale atteinte, les moyens de commande 32 provoquent l'actionnement des moyens de mise en rotation 58 des crayons 2, afin que les huit crayons 2 inspectés soient pivotés selon leurs propres axes longitudinaux. Les crayons de combustible 2 concernés sont par conséquent positionnés dans une position angulaire différente de la précédente, dans le but de contrôler un autre secteur angulaire de la surface extérieure 2a de ces crayons 2.

Lorsque la rotation a eu lieu, le balayage des surfaces extérieures des gaines 3 et des bouchons 6 ainsi que le balayage des cordons de soudure 4 sont à nouveau effectués, lors du déplacement du chariot 28 de la position finale à la position de départ. De la même façon que précédemment, les images prises par les caméras primaires 42 et secondaires 42' ayant fait l'objet d'une détection d'au moins un défaut géométrique sont stockées dans la mémoire centrale 55.

A titre d'exemple illustratif, les moyens de mise en rotation 58 sont programmés pour que la surface extérieure 2a des crayons 2 soit entièrement balayée à la suite de douze rotations. Dans un tel cas, le chariot 28 est commandé par les moyens de commande 32 de façon à réaliser six allers-retours au-dessus des huit mêmes crayons 2 adjacents, chaque aller et chaque retour correspondant à une position angulaire donnée des crayons 2.

Une fois l'ensemble des allers-retours réalisés par le chariot 28 et les images de défauts géométriques transférées dans la mémoire centrale 55 de l'ensemble 30, les moyens de commande 32 génèrent des déplacements du rugosimètre 50 dans le but de mesurer la profondeur de chacun des défauts géométriques détectés.

Ainsi, pour chaque défaut géométrique détecté, le chariot 28, le support 34 et les moyens de mise en rotation 58 sont pilotés par les moyens de commande 32, afin que le rugosimètre 50 soit placé en regard du défaut géométrique concerné. Bien entendu, ces déplacements s'effectuent en fonction de l'adresse de l'image stockée contenant le défaut, ainsi qu'en fonction du positionnement de ce défaut sur l'image.

Ensuite, les moyens de commande 32 provoquent le déplacement de la plaque élévatrice 52, de façon à ce que le rugosimètre 50 se trouve à proximité du défaut 70 détecté, comme le montre la figure 3c. A titre d'exemple indicatif, la plaque 52 est déplacée verticalement vers le bas de façon à ce que le rugosimètre 50 se trouve à 10 mm du défaut 70 détecté.

Des mesures sont alors effectuées par ce rugosimètre 50, qui transmet directement les données récoltées aux moyens d'acquisition et de traitement 51 afin que ceux-ci déterminent la profondeur du défaut 70.

Cette opération est donc réitérée autant de fois que nécessaire pour mesurer la profondeur de tous les défauts géométriques, les valeurs de profondeur étant ensuite associées aux images dans la mémoire centrale 55 de l'ensemble 30.

Le contrôle des huit premiers crayons 2 relatif aux défauts géométriques étant à présent achevé, le chariot 28 est ensuite déplacé dans sa position de départ telle que décrite ci-dessus, puis le support 34 est lui aussi déplacé par rapport au chariot 28 de manière à ce que la tête 36 puisse inspecter les huit crayons 2 suivants, comme cela est illustré en traits fins sur la figure 2.

L'ensemble des opérations décrites ci-dessous sont effectuées de la même façon pour ces huit nouveaux crayons 2, ainsi que pour les deux autres ensembles restants de huit crayons 2 adjacents.

Toujours à titre d'exemple illustratif, une autre solution pourrait consister à prévoir que le chariot 28 soit commandé par les moyens de commande 32 de façon à ce que suite à l'inspection du premier secteur angulaire du premier ensemble de huit crayons 2 adjacents, ce même chariot 28 inspecte non pas le second secteur angulaire du premier ensemble, mais ce même premier secteur angulaire du second ensemble de huit crayons 2 adjacents.

Par conséquent, contrairement à l'exemple précédemment décrit, le chariot 28 effectue une succession d'allers-retours afin d'inspecter un même secteur angulaire de chacun des trente-deux crayons 2 de la nappe. Une fois ce secteur angulaire intégralement inspecté, les moyens de commande 32 provoquent l'actionnement des moyens de mise en rotation 58 des crayons 2, qui entraînent alors un pivotement de la totalité de ces derniers de sorte que leur secteur angulaire suivant puisse à son tour être contrôlé par le chariot 28.

De plus, il pourrait également être prévu, durant les allers-retours effectués par le chariot 28 et dès qu'un défaut géométrique est détecté, que les moyens de commande 32 génèrent immédiatement un déplacement du rugosimètre 50, dans le but de mesurer la profondeur de ce défaut géométrique détecté.

Quelles que soient les solutions retenues parmi celles indiquées ci-dessus, lorsque la nappe de crayons 2 est inspectée, le chariot 28 est équipé d'un lecteur (non représenté) solidaire du support 34, qui est en mesure de lire un code à barres (non représenté) présent sur chacun de ces crayons 2.

Ainsi, lorsque le lecteur lit un code à barres, l'ensemble des informations connues sur le crayon 2 concerné est transféré vers les moyens d'informations 66 aptes à délivrer et/ou à conserver en mémoire une fiche de résultat du contrôle effectué.

Cette fiche de résultat, présentant le code à barres du crayon 2, pourra tout d'abord indiquer la mention « bon » lorsque aucun défaut géométrique n'aura été détecté par le système d'acquisition et de traitement d'images 48.

Par ailleurs, dans le cas où au moins un défaut géométrique aura été détecté par le système 48, la fiche de résultat indiquera alors de préférence la mention « mauvais ». Dans un tel cas, cette fiche pourra également comporter avantageusement les images des défauts détectés, associés aux adresses respectives ainsi qu'aux valeurs de profondeur associées.

Il est noté que dans le cas où aucun défaut géométrique détecté ne dépasse une profondeur de valeur préétablie, par exemple de 25 µm, la mention présente sur la fiche de résultat pourra alors être « à recontrôler », afin de déterminer si la présence des défauts nuit significativement ou non à la qualité de l'état de surface du crayon 2.

Les opérations de détection de certains défauts de propreté comme la présence de traces d'huile et de corps étrangers sur la surface extérieure 2a des crayons 2, ou encore la présence sur cette même surface 2a de marques noires ou colorées de superficies supérieures à une valeur déterminée, peuvent être réalisées de façon similaire à celle exposée pour les opérations de détection de défauts géométriques, et simultanément à ces dernières, tout comme les opérations de détection de défauts d'aspect du cordon de soudure 4 du bouchon d'extrémité 6, ces défauts pouvant se présenter sous la forme de piqûres, de soufflures, de craquelures, de débordements, de manques, d'écroulements, ou encore d'un défaut de coloration du cordon de soudure.

En effet, lorsque les images sont délivrées par les caméras primaires 42 et secondaires 42' au système d'acquisition et de traitement d'images 48, celui-ci est apte à différencier les défauts géométriques des défauts de propreté ou d'aspect du cordon de soudure. Ainsi, lorsqu'un défaut de propreté ou d'aspect du cordon de soudure 4 est décelé, l'image associée à son adresse est directement transférée dans la mémoire centrale 55, mais l'opération de mesure à l'aide du rugosimètre 50 ne sera bien entendu pas ordonnée.

De cette façon, suite à la lecture du code à barres d'un crayon 2, les informations connues sur ce dernier et transférées vers les moyens d'informations 66 pourront alors comprendre des données concernant des défauts de propreté ou d'aspect du cordon de soudure 4 du type décrit ci-dessus, de sorte que dans un tel cas, la mention indiquée par la fiche de résultat du contrôle sera obligatoirement « mauvais ».

Dans le cas où l'association entre les caméras 42,42' et le système d'acquisition et de traitement d'images 48 ne se révèle pas suffisamment satisfaisante pour la détection de défauts de propreté du type traces d'huile présentes sur la surface extérieure 2a des crayons 2, il est alors possible d'effectuer une détection de ce type de défauts à l'aide des rampes d'éclairage 54 couplées aux détecteurs à diodes 56.

Bien entendu, la détection par l'intermédiaire de ces rampes d'éclairage 54 s'effectue parallèlement aux opérations mentionnées ci-dessus, utilisant les caméras 42,42'.

Ainsi, comme représenté sur la figure 4, durant le déplacement du chariot 28 décrit ci-dessus, les détecteurs 56 reçoivent la lumière réfléchie sur les crayons 2 et émise par les rampes 54. Pour ce faire, les axes optiques 72 des détecteurs 56 forment préférentiellement un angle A d'environ 60° avec l'axe longitudinal 74 des crayons 2, dans un plan perpendiculaire au sol 14.

De préférence, aux mêmes instants où s'effectuent les prises de vue par les caméras primaires 42 et secondaires 42', le module de gestion 57 fait l'acquisition des résultats « TOUT » ou « RIEN » délivrés par ces détecteurs 56.

Par conséquent, lorsqu'un détecteur 56 a dans son champ une trace d'huile adhérant à la surface extérieure 2a d'un crayon 2, la réflexion est alors plus intense et le signal délivré par le détecteur 56 passe de « RIEN » à « TOUT ». De cette façon, lors de l'acquisition suivante effectuée par le module de gestion 57, ce dernier est informé de la présence d'une trace d'huile à une adresse donnée, et peut donc transférer ces informations à la mémoire centrale 55.

Naturellement, après chaque acquisition du module de gestion 57, celui-ci provoque la remise à zéro des signaux générés par les détecteurs à diodes 56.

Ainsi, ici encore, suite à la lecture du code à barres d'un crayon 2, les informations connues sur ce dernier et transférées vers les moyens d'informations 66 pourront alors comprendre des données concernant des défauts de propreté du type traces d'huile, de sorte que dans un tel cas, la mention indiquée par la fiche de résultat du contrôle sera obligatoirement « mauvais ».

En outre, il est indiqué qu'avec la présence des caméras 42,42' et du système d'acquisition et de traitement d'images 48, et plus spécifiquement avec celle des caméras primaires 42, il est possible de vérifier que chaque crayon 2 a bien effectué une rotation complète lors des opérations de détection de défauts.

En effet, chaque crayon 2 dispose d'un numéro d'identification inscrit plusieurs fois sur la surface extérieure de la gaine 3, par exemple quatre fois. Ces quatre numéros d'identification identiques sont donc inscrits à une même côte longitudinale du crayon 2 concerné, par exemple sur la surface extérieure de la gaine 3 à proximité du bouchon d'extrémité 6, parallèlement à leur axe longitudinal 74, et tous les 90° autour de ce même axe.

De cette façon, lors du premier aller du chariot 28, lorsque celui-ci vient à être positionné à la côte spécifique des crayons 2 où ces numéros d'identification sont inscrits, la caméra primaire 42 concernée effectue une prise de vue mise en mémoire dans la mémoire centrale 55. Sur l'image obtenue, la position spécifique du numéro d'identification visible définit alors une position angulaire de départ du crayon 2.

Ainsi, les douze positions angulaires de contrôle du crayon 2 étant organisées en recouvrement, la comparaison entre la première image et la douzième image, théoriquement identiques, permet de déterminer si le crayon 2 à subit ou non une rotation complète. Si cela n'est pas le cas, un ou plusieurs incréments supplémentaires peuvent être ordonnés afin d'inspecter la totalité de la surface extérieure 2a du crayon 2.

Naturellement, cette comparaison de la première et de la dernière images prises par la caméra primaire 42 s'effectue à l'aide du système d'acquisition et de traitement d'images 48.

L'invention concerne également un procédé de contrôle d'aspect extérieur de crayons de combustible 2 pour réacteur nucléaire, ce procédé étant susceptible d'être mis en oeuvre à l'aide du dispositif 1 de contrôle qui vient d'être décrit, et comprenant des étapes principales consistant à détecter des défauts géométriques présents sur chaque crayon 2 à contrôler, à l'aide des moyens optiques 40 disposant d'au moins une caméra 42,42' et reliés au système d'acquisition et de traitement d'images 48, puis à mesurer la profondeur de chaque défaut géométrique détecté lors de l'étape de détection de défauts géométriques, à l'aide d'un rugosimètre 50.

Bien entendu, diverses modifications peuvent être apportées par l'homme du métier au dispositif 1 et au procédé de contrôle d'aspect extérieur qui viennent d'être décrits, uniquement à titre d'exemples non limitatifs.

## Revendications

1. Dispositif (1) de contrôle d'aspect extérieur de crayons de combustible (2) pour réacteur nucléaire, **caractérisé en ce qu'**il comprend des moyens optiques (40) disposant d'au moins une caméra (42,42') et reliés à un système d'acquisition et de traitement d'images (48) apte à détecter des défauts géométriques présents sur chaque crayon (2) à contrôler, et **en ce qu'**il comporte en outre un rugosimètre (50) commandé de façon à mesurer la profondeur de chaque défaut géométrique détecté par le système d'acquisition et de traitement d'images (48).

2. Dispositif (1) de contrôle d'aspect selon la revendication 1, **caractérisé en ce qu'**il comprend :
- un banc de déplacement (8) sur lequel peut être amené un plateau (22) muni d'une pluralité de crayons de combustible (2) agencés sensiblement parallèlement les uns à côté des autres, le plateau (22) étant disposé sur le banc (8) de sorte que les crayons (2) soient agencés parallèlement à une direction longitudinale (16) dudit banc (8),
- un chariot (28) apte à être déplacé parallèlement à la direction longitudinale (16) dudit banc de déplacement (8),
- un support de tête d'inspection et de mesure (34) monté sur ledit chariot (28) et apte à être déplacé par rapport à ce dernier parallèlement à une direction transversale (18) dudit banc de déplacement (8) ,
- une tête d'inspection et de mesure (36) comprenant au moins les moyens optiques (40) et le rugosimètre (50),
- des moyens (58) de mise en rotation des crayons de combustible (2), susceptibles de mettre en rotation chacun des crayons (2) selon leur propre axe longitudinal (74),
- un ensemble électronique et informatique (30) comportant notamment ledit système d'acquisition et de traitement d'images (48), et
- une règle codeuse prévue sur le banc de déplacement (8) et apte à délivrer, à l'ensemble électronique et informatique (30), la position du chariot (28) par rapport audit banc (8).

3. Dispositif (1) de contrôle d'aspect selon la revendication 2, **caractérisé en ce que** pour chaque crayon (2), les moyens optiques (40) sont aptes à réaliser un balayage de la surface extérieure (2a) du crayon (2) par une pluralité de déplacements du chariot (28) tout le long du crayon (2) concerné, chaque déplacement étant effectué pour une position angulaire donnée dudit crayon (2).

4. Dispositif (1) de contrôle d'aspect selon la revendication 3, **caractérisé en ce que** lors d'un balayage de la surface extérieure (2a) d'un crayon (2), les moyens optiques (40) sont aptes à délivrer une pluralité d'images au système d'acquisition et de traitement d'images (48), chaque image délivrée du crayon (2) étant associée à une adresse indiquant la position angulaire de ce crayon (2) ainsi que la position du chariot (28) par rapport au banc de déplacement (8).

5. Dispositif (1) de contrôle d'aspect selon la revendication 4, **caractérisé en ce que** lorsqu'au moins un défaut géométrique a été détecté sur un crayon (2) par le système d'acquisition et de traitement d'images (48), l'ensemble électronique et informatique (30) est apte à provoquer, grâce aux adresses associées aux images délivrées par les moyens optiques (40), le déplacement du rugosimètre (50) de manière à ce qu'il puisse mesurer la profondeur de chaque défaut géométrique détecté.

6. Dispositif (1) de contrôle d'aspect selon l'une quelconque des revendications précédentes, **caractérisé en ce que** les moyens optiques (40) comprennent une pluralité de caméras primaires (42) ainsi qu'une pluralité de caméras secondaires (42'), lesdites caméras primaires (42) et secondaires (42') étant des caméras à dispositif à transfert de charge, et étant chacune apte à balayer simultanément au moins deux crayons de combustible (2) adjacents.

7. Dispositif (1) de contrôle d'aspect selon la revendication 6, **caractérisé en ce que** les caméras primaires (42) ainsi que les caméras secondaires (42') sont montées sur une plaque (44) assemblée sur ledit support de tête d'inspection et de mesure (34), et **en ce que** les caméras secondaires (42') sont agencées de manière à pouvoir balayer une surface tronconique (68) d'un bouchon d'extrémité (6) de chacun des crayons de combustible (2) à contrôler.

8. Dispositif (1) de contrôle d'aspect selon l'une quelconque des revendications 2 à 7, **caractérisé en ce que** le rugosimètre (50) est monté sur une plaque élévatrice (52) assemblée sur ledit support de tête d'inspection et de mesure (34), de manière à ce que le rugosimètre (50) puisse être rapproché de chaque crayon (2) pour effectuer la mesure de la profondeur de chaque défaut géométrique détecté.

9. Dispositif (1) de contrôle d'aspect selon l'une quelconque des revendications 2 à 8, **caractérisé en ce que** la tête d'inspection et de mesure (34) comprend en outre des détecteurs à diodes (56) et des rampes d'éclairage (54) permettant de détecter des défauts de propreté présents sur chaque crayon de combustible (2) à contrôler.

10. Dispositif (1) de contrôle d'aspect selon l'une quelconque des revendications 2 à 9, **caractérisé en ce que** l'ensemble électronique et informatique (30) comporte des moyens d'informations (66) aptes à délivrer et/ou à conserver en mémoire, pour chaque crayon (2) contrôlé, une fiche de résultat du contrôle effectué.

11. Procédé de contrôle d'aspect extérieur de crayons de combustible (2) pour réacteur nucléaire, **caractérisé en ce qu'**il comprend les étapes suivantes :
- détection de défauts géométriques présents sur chaque crayon (2) à contrôler, à l'aide de moyens optiques (40) disposant d'au moins une caméra (42,42') et reliés à un système d'acquisition et de traitement d'images (48), et
- mesure de la profondeur de chaque défaut géométrique détecté lors de l'étape de détection de défauts géométriques, à l'aide d'un rugosimètre (50).

12. Procédé de contrôle d'aspect selon la revendication 11, **caractérisé en ce que** pour chaque crayon (2), l'étape de détection de défauts géométriques comprend une opération de balayage de la surface extérieure (2a) dudit crayon (2) à l'aide des moyens optiques (40), l'opération de balayage étant réalisée en effectuant une pluralité de déplacements des moyens optiques (40) tout le long du crayon (2) concerné, chaque déplacement étant réalisé pour une position angulaire donnée dudit crayon (2).

13. Procédé de contrôle d'aspect selon la revendication 12, **caractérisé en ce que** lors de l'opération de balayage de la surface extérieure (2a) d'un crayon (2), les moyens optiques (40) délivrent une pluralité d'images au système d'acquisition et de traitement d'images (48), chaque image délivrée du crayon (2) étant associée à une adresse indiquant la position angulaire de ce crayon (2) ainsi que la position d'un chariot (28) sur lequel sont montés les moyens optiques (40), par rapport à un banc de déplacement (8).

14. Procédé de contrôle d'aspect selon la revendication 13, **caractérisé en ce que** lorsqu'au moins un défaut géométrique a été détecté sur un crayon (2) par le système d'acquisition et de traitement d'images (48), il est procédé, grâce aux adresses associées aux images délivrées par les moyens optiques (40), à un déplacement du rugosimètre (50) de manière à ce qu'il puisse mesurer la profondeur de chaque défaut géométrique détecté.

15. Procédé de contrôle d'aspect selon l'une quelconque des revendications 11 à 14, **caractérisé en ce que** la mesure de la profondeur de chaque défaut géométrique détecté s'effectue en rapprochant le rugosimètre (50) du crayon (2) concerné.

16. Procédé de contrôle d'aspect selon l'une quelconque des revendications 12 à 15, **caractérisé en ce que** l'opération de balayage de la surface extérieure (2a) des crayons (2) s'effectue à l'aide d'une pluralité de caméras primaires (42) ainsi que d'une pluralité de caméras secondaires (42'), lesdites caméras primaires (42) et secondaires (42') étant des caméras à dispositif à transfert de charge, et balayant chacune simultanément au moins deux crayons de combustible (2) adjacents.

17. Procédé de contrôle d'aspect selon l'une quelconque des revendications 11 à 16, **caractérisé en ce qu'**il comprend en outre une opération de détection de défauts de propreté présents sur chaque crayon de combustible (2) à contrôler, l'opération étant susceptible d'être réalisée à l'aide de détecteurs à diodes (56) et de rampes d'éclairage (54).

18. Procédé de contrôle d'aspect selon l'une quelconque des revendications 11 à 17, **caractérisé en ce qu'**il comprend une étape de délivrance, pour chaque crayon (2) contrôlé, d'une fiche de résultat du contrôle effectué.
